# EUROPÄISCHE PATENTSCHRIFT

(11) **EP 3 978 274 B1**
(45) Veröffentlichungstag und Bekanntmachung des Hinweises auf die Patenterteilung: **08.11.2023**
(21) Anmeldenummer: 21197930.7
(22) Anmeldetag: 21.09.2021
(51) Int. Cl.: B60C 11/03, B60C 11/04, B60C 11/13

(54) **NUTZFAHRZEUGREIFEN**
COMMERCIAL VEHICLE TYRES
PNEUMATIQUE DE VÉHICULE UTILITAIRE

(30) Priorität: 01.10.2020 DE 102020212455
(43) Veröffentlichungstag der Anmeldung: 06.04.2022
(73) Patentinhaber: Continental Reifen Deutschland GmbH, 30165 Hannover (DE)
(72) Erfinder: Lacko, Peter, 30419 Hannover (DE); Pikna, Michal, 30419 Hannover (DE); Daries, Ronald, 30419 Hannover (DE)
(74) Vertreter: Continental Corporation

(56) Entgegenhaltungen:
- EP-A1- 3 597 449
- WO-A1-2013/178464
- WO-A1-2015/174413
- DE-A1-102014 223 599
- US-A1- 2006 130 950
- US-A1- 2013 092 304
- US-A1- 2013 105 051
- US-A1- 2016 297 251
- US-A1- 2018 345 734
- US-A1- 2019 001 755
- US-A1- 2019 275 842

## Beschreibung

Die Erfindung betrifft einen Nutzfahrzeugreifen mit einem Laufstreifen mit zumindest einer eine schulterseitige Profilrippe von einer mittleren Profilrippe trennenden, schulterseitigen Umfangsrille.

Aus der EP 0 153 899 A2 ist ein Nutzfahrzeugreifen mit einem Laufstreifen mit beispielsweise vier in Draufsicht zick-zack-förmig umlaufenden Umfangsrillen bekannt, sodass der Laufstreifen drei mittlere, in Draufsicht gleichmäßig zick-zack-förmige verlaufende Profilrippen und zwei schulterseitige Profilrippen mit an der jeweiligen schulterseitigen Umfangsrille in Draufsicht dreieckigen Rippenbereichen aufweist. Die dreieckigen Rippenbereiche werden - im Vergleich zum sonstigen Bereich der schulterseitigen Profilrippe - verstärkt abgerieben, sodass ein ungleichmäßiges Abriebbild auftritt, welches das Entstehen von Einrissen im Gummimaterial im Bereich der schulterseitigen Umfangsrillen ("Groove Cracks") begünstigt und derart zu einer Beeinträchtigung der Laufleistung des Nutzfahrzeugreifens führen kann.

Aus der WO 2006 128 550 A1 ist ein Nutzfahrzeugreifen mit einem Laufstreifen mit einer bei montiertem Fahrzeugluftreifen der Fahrzeugaußenseite zugeordneten Reifenschulter und eine der Fahrzeuginnenseite zugeordneten Reifenschulter bekannt. Der Laufstreifen ist beispielsweise mit vier in Draufsicht gerade verlaufenden, jeweils zwei Rillenflanken aufweisenden Umfangsrillen versehen. Jene Rillenflanken der Umfangsrillen, welche sich bei montiertem Fahrzeugluftreifen näher zur Fahrzeugaußenseite befinden, sind zur radialen Richtung unter einem ersten Winkel geneigt. Die sich bei montiertem Fahrzeugluftreifen näher zur Fahrzeuginnenseite befindlichen Rillenflanken der Umfangsrillen sind zur radialen Richtung unter einem zweiten Winkel geneigt, welcher kleiner ist als erste Winkel. Der erste Winkel beträgt insbesondere 12° bis 30° und der zweite Winkel beträgt vorzugsweise 0° bis 12°. Die getroffenen Maßnahmen sollen zu einer Vergleichmäßigung des Laufstreifenabriebes beitragen.

Die US 2006/0130950 A1 offenbart einen Fahrzeugluftreifen mit einem Laufstreifen mit zwei in Draufsicht gerade verlaufenden mittleren Umfangsrillen, zwei schulterseitigen Umfangsrillen, zwei schulterseitigen Profilrippen, zwei mittleren Profilrippen und einer im Bereich der Reifenäquatorialebene verlaufenden zentralen Profilrippe. Die schulterseitigen Umfangsrillen weisen - jeweils an der Laufstreifenperipherie - eine in Draufsicht gerade verlaufende, laufstreifenaußenseitige Rillenkante und eine in Draufsicht in Form einer harmonischen Welle verlaufende, laufstreifeninnenseitige Rillenkante auf. In jeder Laufstreifenhälfte sind ferner Schrägrillen ausgebildet, welche abschnittsweise über die mittlere Profilrippe und abschnittsweise über die schulterseitige Profilrippe verlaufen. Der Reifen soll im Hinblick auf das Wasserdrainagevermögen, das Griffverhalten auf trockener Fahrbahn und den Abriebwiderstand ausbalanciert sein.

Die US2016/297251 A1 offenbart einen Fahrzeugluftreifen mit einem Laufstreifen mit einer schulterseitigen Umfangsrille, die eine schulterseitige Profilrippe von einer mittleren Profilrippe trennt. Die schulterseitige Umfangsrille weist eine an der Laufstreifenperipherie entlang der schulterseitigen Profilrippe ausgebildete, in Draufsicht gerade verlaufende, laufstreifenaußenseitige Rillenkante und eine an der Laufstreifenperipherie entlang der mittleren Profilrippe ausgebildete, in Draufsicht zickzackförmig verlaufende, laufstreifeninnenseitige Rillenkante auf.

In Laufstreifen von Nutzfahrzeugreifen haben zick-zack-förmig verlaufende Umfangsrillen, insbesondere bedingt durch die zick-zack-förmige verlaufende Rillenkanten, Vorteile hinsichtlich der Traktionseigenschaften. In den Laufstreifenschultern ausgebildete zick-zack-förmig verlaufende Umfangsrillen neigen allerdings zu "Groove Cracks".

Der Erfindung liegt daher die Aufgabe zugrunde, bei einem Nutzfahrzeugreifen der eingangs genannten Art die Gefahr des Auftretens von Groove Cracks im Bereich der schulterseitigen Umfangsrillen unter Beibehalten guter Traktionseigenschaften deutlich zu reduzieren.

Gelöst wird die gestellte Aufgabe erfindungsgemäß durch einen Nutzfahrzeugreifen mit einem Laufstreifen mit zumindest einer eine schulterseitige Profilrippe von einer mittleren Profilrippe trennenden, schulterseitigen Umfangsrille mit einer an der Laufstreifenperipherie entlang der schulterseitigen Profilrippe ausgebildeten, in Draufsicht gerade verlaufenden, laufstreifenaußenseitigen Rillenkante und einer an der Laufstreifenperipherie entlang der mittleren Profilrippe ausgebildeten, in Draufsicht in Form einer harmonischen Welle verlaufenden, laufstreifeninnenseitigen Rillenkante, wobei die schulterseitige Umfangsrille zwischen den Rillenkanten an ihren breitesten Stellen in axialer Richtung eine erste Breite von 10,0 mm bis 25,0 mm und an ihren schmalsten Stellen in axialer Richtung eine zweite Breite von 50% bis 85% der ersten Breite aufweist, wobei die mittlere Profilrippe an ihrer von der schulterseitigen Profilrippe abgewandten Seite von einer in Draufsicht in Form einer harmonischen Welle verlaufenden mittleren Umfangsrille begrenzt ist, welche in Draufsicht parallel zur laufstreifeninnenseitigen Rillenkante der schulterseitigen Umfangsrille verläuft, sodass die mittlere Profilrippe über ihre Umfangserstreckung in axialer Richtung eine konstante Breite aufweist.

Die erfindungsgemäß getroffenen Maßnahmen haben eine spezielle asymmetrische Ausgestaltung der schulterseitigen Umfangsrille(n) zur Folge. Die an der mittleren Profilrippe ausgebildete, wellenförmig verlaufende laufstreifeninnenseitige Rillenkante, deren Amplitude entsprechend der genannten Breiten ausgeführt ist, trägt zu einer Verbesserung der Traktionseigenschaften bei. Durch die gerade verlaufende laufstreifenaußenseitige Rillenkante an der schulterseitigen Profilrippe weist diese eine über den Laufstreifenumfang konstante bzw. weitgehend konstante Breite auf, sodass die Rippensteifigkeit vergleichmäßigt und weitgehend gleichmäßig ist, wodurch das Entstehen von Einrissen am Rillengrund der Umfangsrille (Groove Cracks) vermieden wird.

Gemäß einer bevorzugten Ausführung verläuft die laufstreifeninnenseitige Rillenkante der schulterseitigen Umfangsrille in Draufsicht in Form einer Zick-Zack-Welle, einer Sägezahnwelle, einer Trapezwelle oder einer geschwungenen Welle, wie etwa einer Sinus-Welle. Im Hinblick auf die Traktionseigenschaften ist es besonders günstig, wenn die laufstreifeninnenseitige Rillenkante in Form einer Zick-Zack-Welle verläuft.

Die Rissbeständigkeit des Rillengrundes der schulterseitigen Umfangsrille ist weiter erhöht, wenn die erste Breite der schulterseitigen Umfangsrille 12,0 mm bis 20,0 mm, insbesondere 14,0 mm bis 18,0 mm, beträgt.

Die Amplitude der harmonischen Welle der laufstreifeninnenseitigen Rillenkante ist bevorzugt derart gewählt, dass die zweite Breite der schulterseitigen Umfangsrille 55% bis 80%, insbesondere 60% bis 75%, der ersten Breite beträgt. Dies trägt zu einer weiteren Reduktion der Gefahr des Auftretens von Groove Cracks im Bereich der schulterseitigen Umfangsrille unter Beibehalten guter Traktionseigenschaften bei.

In diesem Zusammenhang ist es ferner von Vorteil, wenn die laufstreifeninnenseitige Rillenkante der schulterseitigen Umfangsrille in Draufsicht in Form einer harmonischen Welle mit einer Wellenlänge von 100% bis 450%, insbesondere von 200% bis 400%, bevorzugt von 250% bis 350%, besonders bevorzugt von 300% bis 340%, der ersten Breite verläuft.

Gemäß einer weiteren bevorzugten Ausführung verläuft die laufstreifeninnenseitige Rillenkante der schulterseitigen Umfangsrille in Draufsicht in Form einer harmonischen Zick-Zack-Welle, wobei an diese eine Rillenflanke anschließt, welche sich aus in Umfangsrichtung aufeinanderfolgenden, zur Umfangsrichtung schräggestellten Flankenflächen zusammensetzt, welche, im in axialer Richtung ausgerichteten Querschnitt betrachtet, zur radialen Richtung jeweils unter einem über ihre Umfangserstreckung konstanten Winkel geneigt sind.

Gemäß einer alternativen und ebenfalls bevorzugten Ausführung verläuft die laufstreifeninnenseitige Rillenkante der schulterseitigen Umfangsrille in Draufsicht in Form einer harmonischen Zick-Zack-Welle, wobei an diese eine Rillenflanke anschließt, welche sich aus in Umfangsrichtung aufeinanderfolgenden Flankenflächen zusammensetzt, welche über ihre Umfangserstreckung relativ zur radialen Richtung sich verdrehende Flächen sind, die, im in axialer Richtung ausgerichteten Querschnitt betrachtet, als gerade Linien erscheinen.

Gemäß einer weiteren bevorzugten Ausführung schließt an die laufstreifenaußenseitige Rillenkante der schulterseitigen Umfangsrille eine Rillenflanke an, welche, im in axialer Richtung ausgerichteten Querschnitt betrachtet, unter einem konstanten Winkel zur radialen Richtung verläuft.

Gemäß einer weiteren alternativen und bevorzugten Ausführung schließt an die laufstreifenaußenseitige Rillenkante der schulterseitigen Umfangsrille eine Rillenflanke an, welche sich aus in Umfangsrichtung aneinander anschließenden Flankenflächen zusammensetzt, die über ihre jeweilige Umfangserstreckung relativ zur radialen Richtung sich verdrehende Flächen sind.

Weitere, die Ausgestaltung des Rillengrundes der schulterseitigen Umfangsrille betreffende Maßnahmen tragen dazu bei, die Rissbeständigkeit in diesem Bereich weiter zu erhöhen.

Bei einer ersten diesbezüglich bevorzugten Ausführung verläuft der Rillengrund der schulterseitigen Umfangsrille in Draufsicht parallel zur laufstreifeninnenseitigen Rillenkante.

Bei einer zweiten diesbezüglich bevorzugten Ausführung verläuft der Rillengrund der schulterseitigen Umfangsrille in Draufsicht in Umfangsrichtung gerade.

Bei einer dritten diesbezüglich bevorzugten Ausführung weist der Rillengrund der schulterseitigen Umfangsrille eine in axialer Richtung ermittelte Breite auf, welche auf eine mit der Breite der schulterseitigen Umfangsrille korrelierende und proportionale Weise variiert.

Die nachfolgend genannten bevorzugten Ausführungen begünstigen das Auftreten eines gleichmäßigen Abriebbildes im Bereich der mittleren Profilrippe.

Eine weitere dieser bevorzugten Ausführungen ist dadurch gekennzeichnet, dass der Laufstreifen in jeder Laufstreifenschulter eine schulterseitige Profilrippe mit einer angrenzenden schulterseitigen Umfangsrille mit einer in Draufsicht gerade verlaufenden, laufstreifenaußenseitigen Rillenkante und einer in Draufsicht in Form der harmonischen Welle verlaufenden, laufstreifeninnenseitigen Rillenkante aufweist.

Weitere Merkmale, Vorteile und Einzelheiten der Erfindung werden nun anhand der Zeichnung, die schematisch Ausführungsbeispiele der Erfindung zeigt, näher beschrieben. Dabei zeigen
Fig. 1 eine Draufsicht auf einen Umfangsabschnitt eines Laufstreifens eines Nutzfahrzeugreifens mit einer ersten Ausführungsvariante der Erfindung,
Fig. 2 eine Draufsicht auf einen Umfangsabschnitt eines Laufstreifens eines Nutzfahrzeugreifens mit einer zweiten Ausführungsvariante der Erfindung und
Fig. 3 eine Draufsicht auf einen Umfangsabschnitt eines Laufstreifens eines Nutzfahrzeugreifens mit einer dritten Ausführungsvariante der Erfindung.

Gemäß der Erfindung ausgeführte Nutzfahrzeugreifen sind insbesondere LKW- oder Bus-Reifen in Radialbauart.

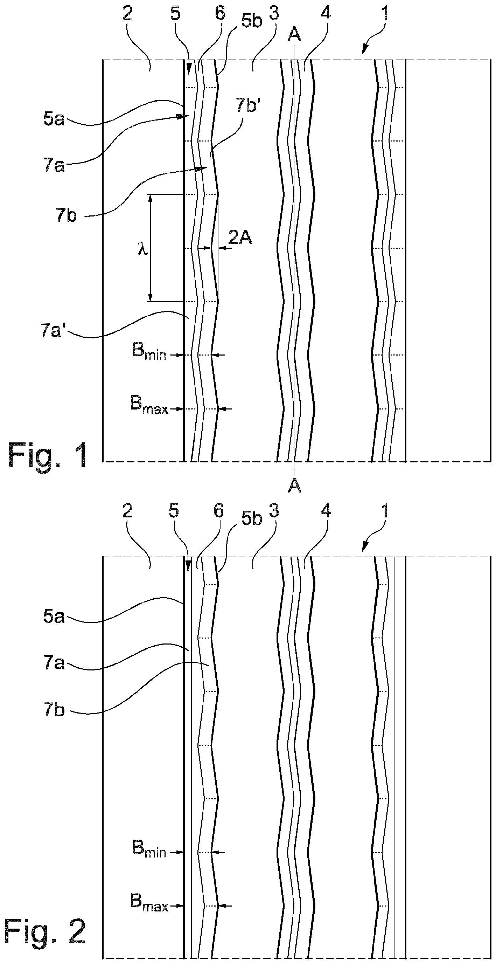

Fig. 1 bis Fig. 3 zeigen jeweils eine Draufsicht auf einen Umfangsabschnitt eines Laufstreifens 1 eines Nutzfahrzeugreifens. Die Reifenäquatorialebene ist in Fig. 1 durch eine Linie A-A angedeutet.

Der Laufstreifen 1 weist zwei schulterseitige Profilrippen 2, zwei mittlere Profilrippen 3, eine in Draufsicht entlang der Reifenäquatorialebene (Linie A-A, Fig. 1) sowie zick-zack-förmig verlaufende zentrale Umfangsrille 4, welche die mittleren Profilrippen 3 voneinander trennt, und zwei schulterseitige Umfangsrillen 5, welche die schulterseitigen Profilrippen 2 von den mittleren Profilrippen 3 trennen, auf. Bevorzugter Weise sind sämtliche Umfangsrillen 4, 5 in radialer Richtung auf die jeweilige Profiltiefe ausgeführt, welche für den vorgesehenen Reifentyp (Nutzfahrzeugreifen) üblicherweise 12,0 mm bis 26,0 mm beträgt.

Die weitere Ausgestaltung der schulterseitigen Umfangsrillen 5 wird nachfolgend unter Bezugnahme auf eine einzelne Umfangsrille 5 (Fig. 1 bis Fig. 3) erläutert.

Die schulterseitige Umfangsrille 5 weist an der Laufstreifenperipherie eine entlang der angrenzenden schulterseitigen Profilrippe 2 ausgebildete, laufstreifenaußenseitige Rillenkante 5a und eine entlang der angrenzenden mittleren Profilrippe 3 ausgebildete, laufstreifeninnenseitige Rillenkante 5b auf. Ferner ist die schulterseitige Umfangsrille 5 durch einen Rillengrund 6, eine von der laufstreifenaußenseitigen Rillenkante 5a ausgehende Rillenflanke 7a und eine von der laufstreifeninnenseitigen Rillenkante 5b ausgehende Rillenflanke 7b begrenzt. Die laufstreifenaußenseitige Rillenkante 5a verläuft, in Draufsicht betrachtet, gerade und in Umfangsrichtung, die laufstreifeninnenseitige Rillenkante 5b verläuft, in Draufsicht betrachtet, in Form einer harmonischen insbesondere zick-zack-förmigen Welle mit einer Wellenlänge λ (Fig. 1) und einer Amplitude A (Fig. 1, wobei die doppelte Amplitude 2A eingezeichnet ist), setzt sich daher aus gleichlangen aufeinanderfolgenden Kantenabschnitten zusammen. Die schulterseitige Umfangsrille 5 weist eine in axialer Richtung zwischen den Rillenkanten 5a, 5b ermittelte, über ihren gesamten Umfang kontinuierlich zu- und abnehmende Breite auf, wobei sie an ihren breitesten Stellen zwischen den Rillenkanten 5a, 5b in axialer Richtung eine Breite Bₘₐₓ von 10,0 mm bis 25,0 mm, insbesondere von 12,0 mm bis 20,0 mm, bevorzugt von 14,0 mm bis 18,0 mm, aufweist. An ihren schmalsten Stellen weist sie zwischen den Rillenkanten 5a, 5b in axialer Richtung eine Breite Bₘᵢₙ auf, wobei die Amplitude A (Fig. 1) derart gewählt ist, dass die Breite Bₘᵢₙ 50% bis 85%, insbesondere 55% bis 80%, bevorzugt 60% bis 75%, der Breite Bₘₐₓ beträgt. Die Wellenlänge λ (Fig. 1) beträgt 100% bis 450%, insbesondere 200% bis 400%, bevorzugt 250% bis 350%, besonders bevorzugt 300% bis 340%, der Breite Bₘₐₓ.

Bei der Variante gemäß Fig. 1 verläuft der Rillengrund 6 der schulterseitigen Umfangsrille 5 in Draufsicht parallel zur laufstreifeninnenseitigen Rillenkante 5b und daher in Draufsicht in Form einer entsprechenden harmonischen Zick-Zack-Welle, wobei der Rillengrund 6 eine in axialer Richtung ermittelte, über die Erstreckung der Umfangsrille 5 konstante Breite aufweist. Die von der laufstreifenaußenseitigen Rillenkante 5a ausgehende Rillenflanke 7a erscheint, im in axialer Richtung ausgerichteten Querschnitt betrachtet, als gerade Linie, welche - bedingt durch den Zick-Zack-Verlauf des Rillengrundes 6 und den geraden Verlauf der Rillenkante 5a - zur radialen Richtung unter einem kontinuierlich zu- bzw. abnehmenden Winkel geneigt ist. Die Rillenflanke 7a setzt sich somit aus in Umfangsrichtung aneinander anschließenden Flankenflächen 7a` zusammen, welche über ihre jeweilige Umfangserstreckung relativ zur radialen Richtung sich verdrehende Flächen sind. Die von der laufstreifeninnenseitigen Rillenkante 5b ausgehende Rillenflanke 7b setzt sich aus zur Umfangsrichtung schräggestellten Flankenflächen 7b` zusammen, welche, im in axialer Richtung ausgerichteten Querschnitt betrachtet, zur radialen Richtung jeweils unter einem über ihre Umfangserstreckung konstanten Winkel geneigt sind.

Bei der in Fig. 2 gezeigten Variante ist der Rillengrund 6 der schulterseitigen Umfangsrille 5 in Draufsicht und bezüglich der Umfangsrichtung asymmetrisch ausgeführt. Die von der laufstreifenaußenseitigen Rillenkante 5a ausgehende Rillenflanke 7a verläuft, im in axialer Richtung ausgerichteten Querschnitt betrachtet, unter einem konstanten Winkel zur radialen Richtung. Die von der laufstreifenaußeninnenseitigen Rillenkante 5b ausgehende Rillenflanke 7b ist übereinstimmende zu jener gemäß Fig. 1 ausgeführt. Der Rillengrund 6 weist daher eine in axialer Richtung ermittelte Breite auf, welche auf eine mit der Breite der schulterseitigen Umfangsrille 5 korrelierende und proportionale Weise über die Erstreckung der schulterseitigen Umfangsrille 5 variiert.

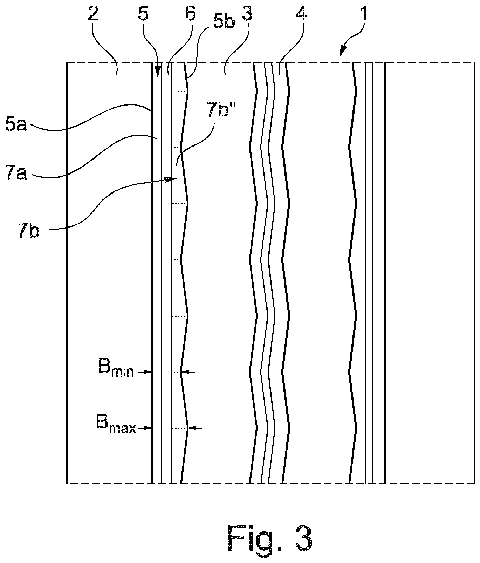

Bei der in Fig. 3 gezeigten Variante verläuft der Rillengrund 6 der schulterseitigen Umfangsrille 5 in Draufsicht gerade und weist eine in axialer Richtung ermittelte, über die Erstreckung der Umfangsrille 5 konstante Breite auf. Die von der laufstreifenaußenseitigen Rillenkante 5a ausgehende Rillenflanke 7a ist übereinstimmend zu jener gemäß Fig. 2 ausgeführt. Die von der laufstreifeninnenseitigen Rillenkante 5b ausgehende Rillenflanke 7b erscheint, im in axialer Richtung ausgerichteten Querschnitt betrachtet, als gerade Linie, welche - bedingt durch den geraden Verlauf des Rillengrunds 6 und den Zick-Zack-Verlauf der Rillenkante 5b - zur radialen Richtung unter einem kontinuierlich zu- bzw. abnehmendem Winkel geneigt ist. Die Rillenflanke 7b setzt sich somit aus in Umfangsrichtung aneinander anschließenden Flankenflächen 7b" zusammen, welche über ihre Umfangserstreckung relativ zur radialen Richtung sich verdrehende Flächen sind.

Bei sämtlichen Ausführungsbeispielen weist die schulterseitige Umfangsrille 5 keine in Draufsicht mittig durch die schulterseitige Umfangsrille 5 verlaufende Symmetrieebene auf.

Ferner ist es bevorzugt, wenn die beiden schulterseitigen Umfangsrillen 5 derart ausgebildet sind, dass die laufstreifeninnenseitigen Rillenkanten 5b übereinstimmende Wellenlängen λ, übereinstimmende Amplituden A und übereinstimmende Breiten Bₘᵢₙ und Bₘₐₓ aufweisen. Ferner sind solche schulterseitigen Umfangsrillen 5 insbesondere derart ausgeführt, dass die laufstreifeninnenseitigen Rillenkanten 5b der beiden Umfangsrillen 5 in Draufsicht parallel zueinander verlaufen, d.h. in Umfangsrichtung versatzfrei zueinander ausgeführt sind, wie es auch in Fig. 1 bis Fig. 3 gezeigt ist. Bei den gezeigten Ausführungsbeispielen verläuft die zentrale Umfangsrille 4 in Draufsicht parallel zu den laufstreifeninnenseitigen Rillenkanten 5b der schulterseitigen Umfangsrillen 5, sodass die mittleren Profilrippen 3 über ihre Umfangserstreckung in axialer Richtung eine konstante Breite aufweisen.

Die Erfindung ist auf die beschriebenen Ausführungsbeispiele nicht beschränkt. Der Schutzumfang der Erfindung wird durch den unabhängigen Patentanspruch 1 definiert.

Der Laufstreifen weist zumindest eine erfindungsgemäß gestaltete schulterseitige Umfangsrille auf. Die laufstreifeninnenseitige Rillenkante der schulterseitigen Umfangsrille verläuft in Draufsicht in Form einer beliebigen harmonischen Welle, beispielsweise einer Sägezahnwelle, einer Trapezwelle oder einer geschwungenen (gerundeten) Welle, wie etwa einer Sinuswelle. Die Profilrippen können mit in an sich bekannter Weise ausgeführten Einschnitten und/oder Querrillen versehen sein. Die Welle der an die laufstreifeninnenseitigen Rillenkante anschließenden Rillenflanke kann sich in radialer Richtung verändern und zwar sowohl im Hinblick auf die Wellenlänge und die Amplitude als auch im Hinblick auf die Wellenform. Insbesondere kann die Rillenflanke am Rillengrund bzw. im Bereich eines radial inneren Flankenabschnittes in Draufsicht in Umfangsrichtung auch gerade verlaufen.

### Bezugsziffernliste

- 1: Laufstreifen
- 2: schulterseitige Profilrippe
- 3: mittlere Profilrippe
- 4: zentrale Umfangsrille
- 5: schulterseitige Umfangsrille
- 5a: laufstreifenaußenseitige Rillenkante
- 5b: laufstreifeninnenseitige Rillenkante
- 6: Rillengrund
- 7a: Rillenflanke
- 7a: Flankenfläche
- 7b: Rillenflanke
- 7b', 7b: Flankenfläche
- A: Amplitude
- A-A: Linie (Äquatorialebene)
- Bₘₐₓ, Bₘᵢₙ: Breite
- λ: Wellenlänge

## Patentansprüche

1. Nutzfahrzeugreifen mit einem Laufstreifen (1) mit zumindest einer eine schulterseitige Profilrippe (2) von einer mittleren Profilrippe (3) trennenden, schulterseitigen Umfangsrille (5) mit einer an der Laufstreifenperipherie entlang der schulterseitigen Profilrippe (2) ausgebildeten, in Draufsicht gerade verlaufenden, laufstreifenaußenseitigen Rillenkante (5a) und einer an der Laufstreifenperipherie entlang der mittleren Profilrippe (3) ausgebildeten, in Draufsicht in Form einer harmonischen Welle verlaufenden, laufstreifeninnenseitigen Rillenkante (5b), wobei die schulterseitige Umfangsrille (5) zwischen den Rillenkanten (5a, 5b) an ihren breitesten Stellen in axialer Richtung eine erste Breite (Bₘₐₓ) von 10,0 mm bis 25,0 mm und an ihren schmalsten Stellen in axialer Richtung eine zweite Breite (Bₘᵢₙ) von 50% bis 85% der ersten Breite (Bₘₐₓ) aufweist, wobei die mittlere Profilrippe (3) an ihrer von der schulterseitigen Profilrippe (2) abgewandten Seite von einer in Draufsicht in Form einer harmonischen Welle verlaufenden mittleren Umfangsrille (4) begrenzt ist, welche in Draufsicht parallel zur laufstreifeninnenseitigen Rillenkante (5b) der schulterseitigen Umfangsrille (5) verläuft, sodass die mittlere Profilrippe (3) über ihre Umfangserstreckung in axialer Richtung eine konstante Breite aufweist.

2. Nutzfahrzeugreifen nach Anspruch 1, **dadurch gekennzeichnet, dass** die laufstreifeninnenseitige Rillenkante (5b) der schulterseitigen Umfangsrille (5) in Draufsicht in Form einer Zick-Zack-Welle, einer Sägezahnwelle, einer Trapezwelle oder einer geschwungenen Welle, wie etwa einer Sinus-Welle, verläuft.

3. Nutzfahrzeugreifen nach Anspruch 1 oder 2, **dadurch gekennzeichnet, dass** die erste Breite (Bₘₐₓ) der schulterseitigen Umfangsrille (5) 12,0 mm bis 20,0 mm, insbesondere 14,0 mm bis 18,0 mm, beträgt.

4. Nutzfahrzeugreifen nach einem der Ansprüche 1 bis 3, **dadurch gekennzeichnet, dass** die zweite Breite (Bₘᵢₙ) der schulterseitigen Umfangsrille (5) 55% bis 80%, insbesondere 60% bis 75%, der ersten Breite (Bₘₐₓ) beträgt.

5. Nutzfahrzeugreifen nach einem der Ansprüche 1 bis 4, **dadurch gekennzeichnet, dass** die laufstreifeninnenseitige Rillenkante (5b) der schulterseitigen Umfangsrille (5) in Draufsicht in Form einer harmonischen Welle mit einer Wellenlänge (λ) von 100% bis 450%, insbesondere von 200% bis 400%, bevorzugt von 250% bis 350%, besonders bevorzugt von 300% bis 340%, der ersten Breite (Bₘₐₓ) verläuft.

6. Nutzfahrzeugreifen nach einem der Ansprüche 1 bis 5, **dadurch gekennzeichnet, dass** die laufstreifeninnenseitige Rillenkante (5b) der schulterseitigen Umfangsrille (5) in Draufsicht in Form einer harmonischen Zick-Zack-Welle verläuft, wobei an diese eine Rillenflanke (7b) anschließt, welche sich aus in Umfangsrichtung aufeinanderfolgenden, zur Umfangsrichtung schräggestellten Flankenflächen (7b') zusammensetzt, welche, im in axialer Richtung ausgerichteten Querschnitt betrachtet, zur radialen Richtung jeweils unter einem über ihre Umfangserstreckung konstanten Winkel geneigt sind.

7. Nutzfahrzeugreifen nach einem der Ansprüche 1 bis 5, **dadurch gekennzeichnet, dass** die laufstreifeninnenseitige Rillenkante (5b) der schulterseitigen Umfangsrille (5) in Draufsicht in Form einer harmonischen Zick-Zack-Welle verläuft, wobei an diese eine Rillenflanke (7b) anschließt, welche sich aus in Umfangsrichtung aufeinanderfolgenden Flankenflächen (7b") zusammensetzt, welche über ihre Umfangserstreckung relativ zur radialen Richtung sich verdrehende Flächen sind, die, im in axialer Richtung ausgerichteten Querschnitt betrachtet, als gerade Linien erscheinen.

8. Nutzfahrzeugreifen nach einem der Ansprüche 1 bis 7, **dadurch gekennzeichnet, dass** an die laufstreifenaußenseitige Rillenkante (5a) der schulterseitigen Umfangsrille (5) eine Rillenflanke (7a) anschließt, welche, im in axialer Richtung ausgerichteten Querschnitt betrachtet, unter einem konstanten Winkel zur radialen Richtung verläuft.

9. Nutzfahrzeugreifen nach einem der Ansprüche 1 bis 7, **dadurch gekennzeichnet, dass** an die laufstreifenaußenseitige Rillenkante (5a) der schulterseitigen Umfangsrille (5) eine Rillenflanke (7a) anschließt, welche sich aus in Umfangsrichtung aneinander anschließenden Flankenflächen (7a') zusammensetzt, die über ihre jeweilige Umfangserstreckung relativ zur radialen Richtung sich verdrehende Flächen sind.

10. Nutzfahrzeugreifen nach einem der Ansprüche 1 bis 9, **dadurch gekennzeichnet, dass** der Rillengrund (6) der schulterseitigen Umfangsrille (5) in Draufsicht parallel zur laufstreifeninnenseitigen Rillenkante (5b) verläuft.

11. Nutzfahrzeugreifen nach einem der Ansprüche 1 bis 9, **dadurch gekennzeichnet, dass** der Rillengrund (6) der schulterseitigen Umfangsrille (5) in Draufsicht gerade in Umfangsrichtung verläuft.

12. Nutzfahrzeugreifen nach einem der Ansprüche 1 bis 9, **dadurch gekennzeichnet, dass** der Rillengrund (6) der schulterseitigen Umfangsrille (5) eine in axialer Richtung ermittelte Breite aufweist, welche auf eine mit der Breite der schulterseitigen Umfangsrille (5) korrelierende und proportionale Weise variiert.

13. Nutzfahrzeugreifen nach einem der Ansprüche 1 bis 12, **dadurch gekennzeichnet, dass** der Laufstreifen (1) in jeder Laufstreifenschulter eine schulterseitige Profilrippe (2) mit einer angrenzenden schulterseitigen Umfangsrille (5) mit einer in Draufsicht gerade verlaufenden, laufstreifenaußenseitigen Rillenkante (5a) und einer in Draufsicht in Form der harmonischen Welle verlaufenden, laufstreifeninnenseitigen Rillenkante (5b) aufweist.

## Claims

1. Commercial-vehicle tyre having a tread (1) with at least one shoulder-side circumferential groove (5), which separates a shoulder-side profile rib (2) from a middle profile rib (3) and has a tread-outer-side groove edge (5a), formed on the tread periphery along the shoulder-side profile rib (2) and extending straight in plan view, and a tread-inner-side groove edge (5b), formed on the tread periphery along the middle profile rib (3) and extending in the form of a harmonic wave in plan view, wherein the shoulder-side circumferential groove (5) has between the groove edges (5a, 5b) a first width (Bₘₐₓ) of 10.0 mm to 25.0 mm at its widest points in the axial direction and a second width (Bₘᵢₙ) of 50% to 85% of the first width (Bₘₐₓ) at its narrowest points in the axial direction, wherein the middle profile rib (3) is delimited at its side facing away from the shoulder-side profile rib (2) by a middle circumferential groove (4), which extends in the form of a harmonic wave in plan view and extends parallel to the tread-inner-side groove edge (5b) of the shoulder-side circumferential groove (5) in plan view, so that the middle profile rib (3) has a constant width in the axial direction over its circumferential extent.

2. Commercial-vehicle tyre according to Claim 1, **characterized in that** the tread-inner-side groove edge (5b) of the shoulder-side circumferential groove (5) extends in the form of a zigzag wave, a sawtooth wave, a trapeziform wave or a curved wave, such as for example a sine wave, in plan view.

3. Commercial-vehicle tyre according to Claim 1 or 2, **characterized in that** the first width (Bₘₐₓ) of the shoulder-side circumferential groove (5) is 12.0 mm to 20.0 mm, in particular 14.0 mm to 18.0 mm.

4. Commercial-vehicle tyre according to one of Claims 1 to 3, **characterized in that** the second width (Bₘᵢₙ) of the shoulder-side circumferential groove (5) is 55% to 80%, in particular 60% to 75%,of the first width (Bₘₐₓ).

5. Commercial-vehicle tyre according to one of Claims 1 to 4, **characterized in that** the tread-inner-side groove edge (5b) of the shoulder-side circumferential groove (5) extends in the form of a harmonic wave with a wavelength (λ) of 100% to 450%, in particular of 200% to 400%, preferably of 250% to 350%, particular preferably of 300% to 340%, of the first width (Bₘₐₓ) in plan view.

6. Commercial-vehicle tyre according to one of Claims 1 to 5, **characterized in that** the tread-inner-side groove edge (5b) of the shoulder-side circumferential groove (5) extends in the form of a harmonic zigzag wave in plan view, wherein said tread-inner-side groove edge is adjoined by a groove flank (7b) made up of circumferentially successive flank surfaces (7b') which are positioned obliquely to the circumferential direction and which, as viewed in a cross section oriented in the axial direction, are inclined, in each case at an angle which is constant over the circumferential extent thereof, to the radial direction.

7. Commercial-vehicle tyre according to one of Claims 1 to 5, **characterized in that** the tread-inner-side groove edge (5b) of the shoulder-side circumferential groove (5) extends in the form of a harmonic zigzag wave in plan view, wherein said tread-inner-side groove edge is adjoined by a groove flank (7b) made up of circumferentially successive flank surfaces (7b") which are surfaces that are twisted relative to the radial direction over the circumferential extent thereof and which, as viewed in a cross section oriented in the axial direction, appear as straight lines.

8. Commercial-vehicle tyre according to one of Claims 1 to 7, **characterized in that** the tread-outer-side groove edge (5a) of the shoulder-side circumferential groove (5) is adjoined by a groove flank (7a) which, as viewed in a cross section oriented in the axial direction, extends at a constant angle to the radial direction.

9. Commercial-vehicle tyre according to one of Claims 1 to 7, **characterized in that** the tread-outer-side groove edge (5a) of the shoulder-side circumferential groove (5) is adjoined by a groove flank (7a) made up of circumferentially mutually adjoining flank surfaces (7a') which are surfaces that are twisted relative to the radial direction over the respective circumferential extent thereof.

10. Commercial-vehicle tyre according to one of Claims 1 to 9, **characterized in that** the groove base (6) of the shoulder-side circumferential groove (5) extends parallel to the tread-inner-side groove edge (5b) in plan view.

11. Commercial-vehicle tyre according to one of Claims 1 to 9, **characterized in that** the groove base (6) of the shoulder-side circumferential groove (5) extends straight in the circumferential direction in plan view.

12. Commercial-vehicle tyre according to one of Claims 1 to 9, **characterized in that** the groove base (6) of the shoulder-side circumferential groove (5) has a width, determined in the axial direction, which varies in a manner correlated with and proportional to the width of the shoulder-side circumferential groove (5).

13. Commercial-vehicle tyre according to one of Claims 1 to 12, **characterized in that**, in each tread shoulder, the tread (1) has a shoulder-side profile rib (2) with an adjoining shoulder-side circumferential groove (5), which has a tread-outer-side groove edge (5a), extending straight in plan view, and a tread-inner-side groove edge (5b), extending in the form of a harmonic wave in plan view.

## Revendications

1. Pneumatique de véhicule utilitaire comportant une bande de roulement (1) comportant au moins une rainure circonférentielle (5) côté épaulement séparant une rainure profilée (2) côté épaulement d'une rainure profilée (3) centrale, laquelle rainure circonférentielle est dotée d'un bord de rainure (5a) formé à la périphérie de la bande de roulement le long de la rainure profilée (2) côté épaulement, s'étendant de manière rectiligne en vue de dessus, situé du côté extérieur de la bande de roulement et d'un bord de rainure (5b) formé à la périphérie de la bande de roulement le long de la rainure profilée (3) centrale, s'étendant sous la forme d'une onde harmonique en vue de dessus, situé du côté intérieur de la bande de roulement, la rainure circonférentielle (5) côté épaulement présentant, entre les bords de rainure (5a, 5b) au niveau de ses points les plus larges dans la direction axiale, une première largeur (Bₘₐₓ) de 10,0 mm à 25,0 mm et au niveau de ses points les plus étroits dans la direction axiale, une deuxième largeur (Bₘᵢₙ) de 50% à 85% de la première largeur (Bₘₐₓ), la rainure profilée (3) centrale étant, sur son côté opposé à la rainure profilée (2) côté épaulement, délimitée par une rainure circonférentielle (4) centrale s'étendant sous la forme d'une onde harmonique en vue de dessus, laquelle rainure circonférentielle s'étend parallèlement au bord de rainure (5b), situé du côté intérieur de la bande de roulement, de la rainure circonférentielle (5) côté épaulement en vue de dessus, de sorte que la rainure profilée (3) centrale présente une largeur constante dans la direction axiale sur son étendue circonférentielle.

2. Pneumatique de véhicule utilitaire selon la revendication 1, **caractérisé en ce que** le bord de rainure (5b), situé du côté intérieur de la bande de roulement, de la rainure circonférentielle (5) côté épaulement s'étend, en vue de dessus, sous la forme d'une onde en zigzag, d'une onde en dents de scie, d'une onde trapézoïdale ou d'une onde incurvée, par exemple une onde sinusoïdale.

3. Pneumatique de véhicule utilitaire selon la revendication 1 ou 2 **caractérisé en ce que** la première largeur (Bₘₐₓ) de la rainure circonférentielle (5) côté épaulement vaut de 12,0 mm à 20,0 mm, en particulier de 14,0 mm à 18,0 mm.

4. Pneumatique de véhicule utilitaire selon l'une des revendications 1 à 3, **caractérisé en ce que** la deuxième largeur (Bₘᵢₙ) de la rainure circonférentielle (5) côté épaulement vaut de 55% à 80%, en particulier de 60% à 75%, de la première largeur (Bmax).

5. Pneumatique de véhicule utilitaire selon l'une des revendications 1 à 4, **caractérisé en ce que** le bord de rainure (5b), situé du côté intérieur de la bande de roulement, de la rainure circonférentielle (5) côté épaulement s'étend, en vue de dessus, sous la forme d'une onde harmonique présentant une longueur d'onde (λ) de 100% à 450%, en particulier de 200% à 400%, de préférence de 250% à 350%, de manière particulièrement préférée de 300% à 340%, de la première largeur (Bmax).

6. Pneumatique de véhicule utilitaire selon l'une des revendications 1 à 5, **caractérisé en ce que** le bord de rainure (5b), situé du côté intérieur de la bande de roulement, de la rainure circonférentielle (5) côté épaulement s'étend, en vue de dessus, sous la forme d'une onde harmonique en zigzag, un flanc de rainure (7b) se raccordant à celle-ci, lequel flanc se compose de surfaces de flanc (7b') successives dans la direction circonférentielle, en biais par rapport à la direction circonférentielle, lesquelles surfaces, considérées dans la section transversale orientée dans la direction axiale, sont inclinées par rapport à la direction radiale respectivement suivant un angle constant sur leur étendue circonférentielle.

7. Pneumatique de véhicule utilitaire selon l'une des revendications 1 à 5, **caractérisé en ce que** le bord de rainure (5b), situé du côté intérieur de la bande de roulement, de la rainure circonférentielle (5) côté épaulement s'étend, en vue de dessus, sous la forme d'une onde harmonique en zigzag, un flanc de rainure (7b) se raccordant à celle-ci, lequel flanc se compose de surfaces de flanc (7b") successives dans la direction circonférentielle, lesquelles surfaces sont des surfaces gauchies par rapport à la direction radiale sur leur étendue circonférentielle, lesquelles surfaces, considérées dans la section transversale orientée dans la direction axiale, se présentent sous forme de lignes droites.

8. Pneumatique de véhicule utilitaire selon l'une des revendications 1 à 7, **caractérisé en ce qu'**un flanc de rainure (7a) se raccorde au bord de rainure (5a), situé du côté extérieur de la bande de roulement, de la rainure circonférentielle (5) côté épaulement, lequel flanc de rainure, considéré dans la section transversale orientée dans la direction axiale, s'étend suivant un angle constant par rapport à la direction radiale.

9. Pneumatique de véhicule utilitaire selon l'une des revendications 1 à 7, **caractérisé en ce qu'**un flanc de rainure (7a) se raccorde au bord de rainure (5a), situé du côté extérieur de la bande de roulement, de la rainure circonférentielle (5) côté épaulement, lequel flanc de rainure se compose de surfaces de flanc (7a') se raccordant les unes aux autres dans la direction circonférentielle, lesquelles surfaces de flanc sont des surfaces gauchies par rapport à la direction radiale sur leur étendue circonférentielle respective.

10. Pneumatique de véhicule utilitaire selon l'une des revendications 1 à 9, **caractérisé en ce que** le fond de rainure (6) de la rainure circonférentielle (5) côté épaulement s'étend parallèlement au bord de rainure (5b) situé du côté intérieur de la bande de roulement en vue de dessus.

11. Pneumatique de véhicule utilitaire selon l'une des revendications 1 à 9, **caractérisé en ce que** le fond de rainure (6) de la rainure circonférentielle (5) côté épaulement s'étend de manière rectiligne dans la direction circonférentielle en vue de dessus.

12. Pneumatique de véhicule utilitaire selon l'une des revendications 1 à 9, **caractérisé en ce que** le fond de rainure (6) de la rainure circonférentielle (5) côté épaulement présente une largeur déterminée dans la direction axiale, laquelle largeur varie d'une manière corrélée et proportionnelle à la largeur de la rainure circonférentielle (5) côté épaulement.

13. Pneumatique de véhicule utilitaire selon l'une des revendications 1 à 12, **caractérisé en ce que** la bande de roulement (1) présente, dans chaque épaulement de bande de roulement, une rainure profilée (2) côté épaulement avec une rainure circonférentielle (5) côté épaulement adjacente dotée d'un bord de rainure (5a) s'étendant de manière rectiligne en vue de dessus, situé du côté extérieur de la bande de roulement, et d'un bord de rainure (5b) s'étendant sous la forme de l'onde harmonique en vue de dessus, situé du côté intérieur de la bande de roulement.
